# EUROPEAN PATENT SPECIFICATION

(11) **EP 3 111 361 B1**
(45) Date of publication and mention of the grant of the patent: **28.02.2018**
(21) Application number: 15714936.0
(22) Date of filing: 28.02.2015
(51) Int. Cl.: G06F 21/35, G06F 21/82, B60R 25/00

(54) **SAFETY MEASURES FOR A NETWORK, SECURED NETWORK AND METHOD FOR SECURING A NETWORK.**
SICHERHEITSMASSNAHMEN FÜR EIN NETZWERK, GESICHERTES NETZWERK UND VERFAHREN ZUR SICHERUNG EINES NETZWERKS
MESURES DE SÉCURITÉ POUR UN RÉSEAU, RÉSEAU SÉCURISÉ ET PROCÉDÉ DE SÉCURISATION D'UN RÉSEAU

(30) Priority: 28.02.2014 BE 201400141
(43) Date of publication of application: 04.01.2017
(73) Proprietor: Digital Car Services BVBA, 2100 Antwerpen (BE)
(72) Inventor: BEGDOURI, Mohammed, B-2100 Antwerpen (BE)
(74) Representative: Van hunsel, Lieven M.S.
(86) International application number: PCT/IB2015/051493
(87) International publication number: WO 2015/128854

(56) References cited:
- EP-A1- 1 912 150
- GB-A- 2 459 328
- Anonymous: "Keyless theft via OBD key cloning - post #9", , 5 September 2012 (2012-09-05), XP055160204, Retrieved from the Internet: URL:http://f30.bimmerpost.com/forums/showt hread.php?t=688307 [retrieved on 2015-01-07]
- Ivan Studnia ET AL: "Security of embedded automotive networks: state of the art and a research proposal", the 32nd International Conference on Computer Safety, Reliability and Security, 1 September 2013 (2013-09-01), XP055200894, Retrieved from the Internet: URL:https://hal.archives-ouvertes.fr/hal-0 0848234/document [retrieved on 2015-07-08]

## Description

Safety measures for a network, secured network and method for securing a network.

The present invention concerns safety measures for a network, particularly useful for the security of a network as is usually provided in a vehicle.

It is known that cars are provided with a network.

Such a network in a car is, as is also customary for other networks, characterised by the presence of an access connector or gateway, in the case of a car also called OBD or EOBD connector in technical jargon.

Further, a network in a car comprises several buses, such as a MOST bus and a CAN bus.

The problem arising is that, via the access connector, the encryption for the key acceptance can be replaced or overwritten.

It is clear that, in practice, this is also done with less good intentions, for example when the aim is to steal the car.

Many cars are being stolen in that way at present, whereby one proceeds as follows.

One starts with a programming unit and a corrupt, false or "empty" key whose code is known, further often referred to as the corrupt code.

The programming unit is connected to the OBD connector and the corrupt code which corresponds to the corrupt code of the corrupt key is introduced in the network.

In other words, the control over the car is not obtained by forging the key or by copying a correct or original key, but by starting with a corrupt key with a given encryption, and by introducing this corrupt encryption in the communication system of the car.

The present invention aims to remedy the above-mentioned and other disadvantages of the known networks.

To this end, the invention concerns safety measures for a network comprising at least a switch provided in front of or between an access connector and the part of the network to be secured, which switch is at least controlled on the basis of the possible availability of a corresponding key or the like in the vicinity of the switch.

There is no need to interrupt the vehicle's own network. The network is maintained. Interrupting the cabling/network of the vehicle may give rise to problems, especially in the field of responsibilities and the corresponding viewpoint of the vehicle manufacturer.

In other words, it is a so-called plug & play system placed in front of the vehicle's own network, preferably by a professional and qualified expert, so that there is no interference on the vehicle's own network.

The system is specifically designed to execute the envisaged function.

A major advantage consists in that in the absence of an original key or the like, the switch will be flipped in such a way that access is prevented to the secure part of the network.

According to this innovation, a seizure of the existing vehicle network is required to that end to ensure the functioning of the system.

According to a preferred variant, in the absence of a key or the like corresponding to the switch, a possibly connected programming unit will be destroyed or damaged, for example by providing an overvoltage of for example ninety volts.

The system is equipped with safety devices making it self-destructive, i.e. self-protective, in case of any established tensile damage (cable damage and auto-reset in case of a short-circuit) with a mechanical disconnection between the original vehicle access and the system.

A housing is provided for which has been especially designed for this application with a number of built-in security features, among others such that it is not accessible without destruction.

The system is protected by a no-pull system (the cutting cable) so that it cannot be reached by pulling it closer; i.e. the cable will finally break and the unit remains stuck on the spot.

Access to the system requires a considerable disassembly of the inner lining / dashboard, which is laborious and discourages abuse and/or theft.

The present invention also concerns a secured network comprising at least a switch provided in front of or between an access connector and the part of the network to be secured, which switch(es) is/are at least controlled on the basis of the possible availability of a corresponding key or the like in the vicinity of the switch.

The safety measure interrupts not just a single channel but mechanically or electronically interrupts all channels of the access bus, i.e. usually 14 channels.

The present invention also concerns a method for securing a network, which method consists, when it is established that an external programming unit is coupled to an access connector, in checking whether a key or the like corresponding to a switch is available in the immediate vicinity of the network and, in case such a corresponding key or the like is available, in providing access to the secured parts of the network by flipping a switch or by keeping it in place, and in case such a key or the like corresponding to a switch is not available, in preventing access to the secured parts of the network by appropriately flipping the switch in that case.

Note that where there is a key or the like corresponding to the switch, this may also be a digital key, such as for example a code which may or may not be transmitted wirelessly. The system can only be switched off via a coded signal, via an ultra-secure encryption key.

In order to better explain the characteristics of the invention, the following preferred embodiment of safety measures for a network according to the invention is described by way of example only without being limitative in any way, with reference to the accompanying figures in which:
figure 1 schematically represents a network and safety measures according to the invention;
figure 2 schematically represents a network and an alternative embodiment of safety measures according to the invention.

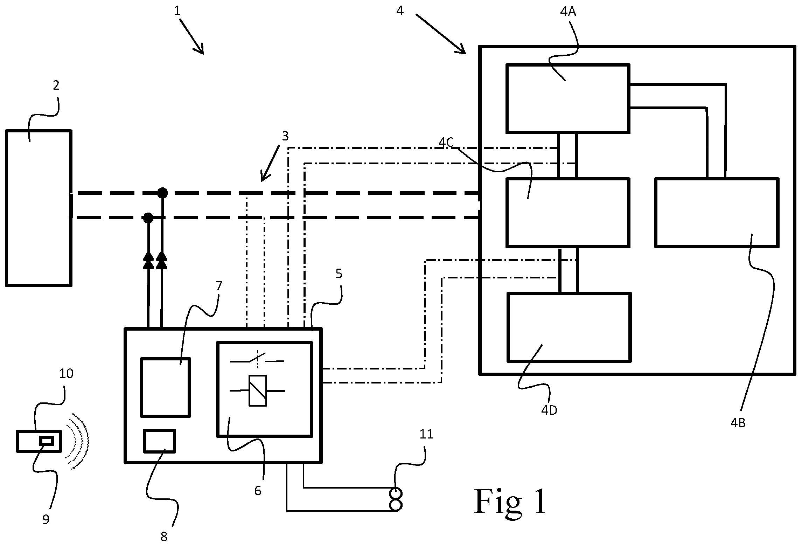

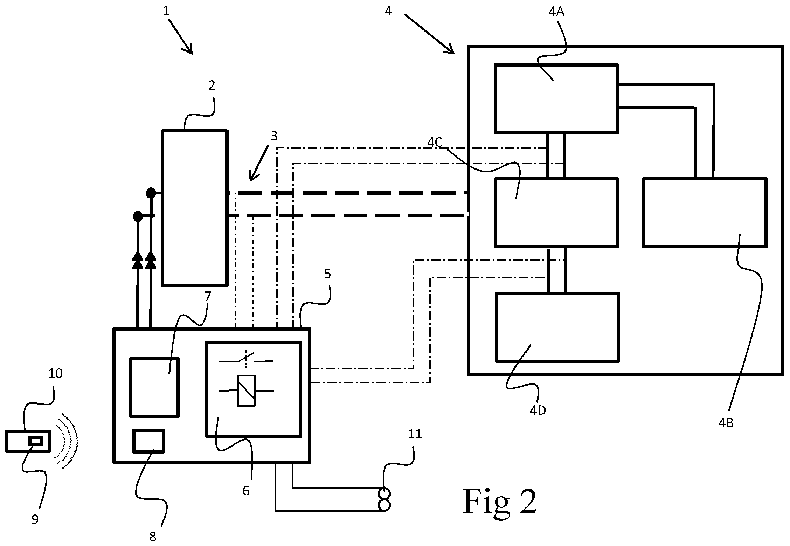

Figure 1 well as figure 2 represent a network 1 as is usually provided in a car.

The network 1 comprises a gateway 2, various communication buses 3 and in this case four/all control units 4, often also called processing units.

The control unit 4A represented at the top is the so-called "gateway" 4A, and it makes sure that the different communication buses 3 are used at the same height.

The gateway 4A is also directly connected to the so-called IP-control unit 4B or the instrument panel 4B here.

The control unit 4C represented in the middle is the so-called "Car Access System", also called CAS for some brands, with security units which are preferably not interrupted.

The control unit 4D represented ad the bottom is the so-called Engine Control Unit.

According to the invention, the network is provided with a security unit 5 which, as shown in figure 1, is functionally provided between the gateway 2 and the control or processing units 4.

According to the alternative embodiment of the safety measures as represented in figure 2, the security unit 5 is functionally provided in front of the gateway 2, offering as a major advantage that there is no need to interrupt the vehicle's own network, so that the network is maintained.

The security unit 5 includes switches 6, in this case six relays 6 or equivalent, a logical processing unit 7 and a receiver 8.

In the vicinity of the security unit 5 is represented a transmitter 9 or equivalent corresponding to the security unit 5, integrated in the same housing 10 here as the original key of the car or an external unit.

The transmitter can for example also be replaced by a code keyboard or the like.

The security unit 5 is also connected to a visual display unit 11 here.

The operation of the safety measures according to the invention is simple and as follows.

When the network 1 is connected to a programming unit not represented here, which is connected to the gateway 2, the security unit 5 will establish this and check whether a transmitter 9 or equivalent corresponding to the security unit 5 is in the vicinity as well.

In the given embodiment, if applicable, a communication will be established between any available transmitter 9 or equivalent on the one hand, and the receiver 8 in the security unit 5 on the other hand.

When the transmitter 9 or equivalent corresponding to the security unit 5 is available, the security unit 5 will have the communication between the programming unit and the network 1 just go ahead.

However, in the case that there is no transmitter 9 corresponding to the security unit 5 available, the security unit 5 will indeed prevent any communication between the programming unit and the network 1, in this case by switching the relays 6 and by opening the connection between gateway 2 and the part of the network 1 to be secured.

Thus, any data exchange between gateway 2 and the control or processing unit 4 is prevented.

The communication bus 3 is literally interrupted.

Alternatively, the switches 6 may also be electronic switches, but the use of analogous switches such as the relays 6 is advantageous in that manipulation or inventing bypasses will be made seriously more difficult.

If necessary, the security unit 5 may additionally destroy or damage the programming unit by providing an overvoltage of for example ninety volts, what is called the TOAST function.

Naturally, prior to that, for example just before said additional action, a warning may be given. The overtension may be built up in capacitors.

The transmitter 9 or equivalent which corresponds to the security unit 5 may continuously transmit, for example every two or three seconds, a so-called hopping code or rolling code, or several ones, for example four hopping codes, which significantly enhances the security.
Also transmitting several hoppings simultaneously is possible.

The invention is by no means restricted to the embodiment of safety measures for a network according to the invention described by way of example and represented in the accompanying drawings; on the contrary, such safety measures for a network according to the invention can be realised in many different ways while still remaining within the scope of the invention.

## Claims

1. Safety means for a network (1) in a vehicle, whereby the network (1) includes various communication buses (3) and control units (4), also called processing units, **characterised in that** the network is provided with a security unit (5) which is functionally provided between a gateway (2) or access connector (2), and a part of the network (1) to be secured, in particular the control or processing units (4) of the network (1), which security unit (5) comprises switches (6), a logical processing unit (7) and a receiver (8), of which at least one switch (6) is controlled on the basis of the possible availability of a corresponding key and/or a code sent by a transmitter (9) in the vicinity of the switch (6), and which security unit (5) can communicate with the transmitter (9) or a code keyboard which is tuned to the security unit (5).

2. Secured network including the safety means according to claim 1.

3. Method for securing a network (1) in a vehicle, which method consists, when the coupling of an external programming unit to an access connector (2) is established, in checking whether a key and/or a code sent by a transmitter (9) corresponding to a switch (6) is available in the immediate vicinity of the network (1), and, if such a corresponding key and/or code sent by a transmitter (9) is available or is detected, in providing access to secured parts of the network (1) by flipping or maintaining a switch (6), and if such a key and/or code sent by a transmitter (9) corresponding to a switch is not available or is not detected, in preventing the access to the secured parts of the network (1) by appropriately flipping the switch (6) in that case.

4. Method according to claim 3, **characterised in that** it makes use of safety means according to claim 1.

5. Method according to claim 3, **characterised in that** it makes use of a secured network according to claim 2.

## Patentansprüche

1. Sicherheitsmittel für ein Netzwerk (1) in einem Fahrzeug, wobei dieses Netzwerk (1) verschiedene Kommunikationsbusse (3) und Steuereinheiten (4), auch Verarbeitungseinheiten genannt, beinhaltet, **dadurch gekennzeichnet, dass** das Netzwerk mit einer Sicherheitseinheit (5) versehen ist, die funktionell zwischen einem Gateway (2) oder Anschlussverbinder (2) und einem zu sichernden Teil des Netzwerks (1), insbesondere den Steuer- oder Verarbeitungseinheiten (4) des Netzwerks (1), vorgesehen ist, welche Sicherheitseinheit (5) Schalter (6), eine Logik-Verarbeitungseinheit (7) und einen Empfänger (8) umfasst, wovon mindestens ein Schalter (6) auf Basis der eventuellen Verfügbarkeit eines entsprechenden Schlüssels und/oder eines von einem Sender (9) gesendeten Codes in der Umgebung des Schalters (6) gesteuert wird, und welche Sicherheitseinheit (5) mit dem Sender (9) oder einer Codetastatur, die auf die Sicherheitseinheit (5) abgestimmt ist, kommunizieren kann.

2. Gesichertes Netzwerk, welches das Sicherheitsmittel nach Anspruch 1 beinhaltet.

3. Verfahren zur Sicherung eines Netzwerks (1) in einem Fahrzeug, welches Verfahren daraus besteht, wenn die Ankoppelung einer externen Programmiereinheit an einen Anschlussverbinder (2) festgestellt wird, zu überprüfen, ob ein auf einen Schalter (6) abgestimmter Schlüssel und/oder ein von einem Sender (9) gesendeter Code in der unmittelbaren Umgebung des Netzwerks (1) verfügbar ist, und, wenn ein solcher entsprechender Schlüssel und/oder von einem Sender (9) gesendeter Code verfügbar ist oder ermittelt wird, Zugang zu gesicherten Teilen des Netzwerks (1) zu verleihen, indem ein Schalter (6) umgeschaltet oder belassen wird, und, wenn ein solcher auf einen Schalter (6) abgestimmter Schlüssel und/oder von einem Sender (9) gesendeter Code nicht verfügbar ist oder nicht ermittelt wird, den Zugang zu den gesicherten Teilen des Netzwerks (1) zu verhindern, indem der Schalter (6) in dem Fall auf geeignete Weise geschaltet wird.

4. Verfahren nach Anspruch 3, **dadurch gekennzeichnet, dass** es Sicherheitsmittel nach Anspruch 1 anwendet.

5. Verfahren nach Anspruch 3, **dadurch gekennzeichnet, dass** es ein gesichertes Netzwerk nach Anspruch 2 anwendet.

## Revendications

1. Moyen de sécurité pour un réseau (1) dans un véhicule, dans lequel le réseau (1) englobe divers bus de communication (3) et diverses unités de commande (4) que l'on désigne également par le terme « unités de traitement », **caractérisé en ce que** le réseau est équipé d'une unité de sécurité (5) qui est prévue de manière fonctionnelle entre une passerelle (2) et un connecteur d'accès (2) et une partie du réseau (1) à sécuriser, en particulier les unités de commande ou de traitement (4) du réseau (1) ; ladite unité de sécurité (5) comprend des commutateurs (6), une unité de traitement logique (7) et un récepteur (8), au moins un commutateur (6) étant commandé sur la base de la disponibilité possible d'une clé correspondante et/ou d'un code envoyé par un émetteur-récepteur (9) à proximité du commutateur (6) ; et ladite unité de sécurité (5) peut communiquer avec l'émetteur-récepteur (9) ou avec un clavier de codes qui est synchronisé par rapport à l'unité de sécurité (5).

2. Réseau sécurisé englobant le moyen de sécurité selon la revendication 1.

3. Procédé pour sécuriser un réseau (1) dans un véhicule, le procédé consistant à, lorsque le couplage d'une unité de programmation externe à un connecteur d'accès (2) est établi, vérifier le fait de savoir si une clé et/ou un code envoyé par un émetteur-récepteur (9) correspondant à un commutateur (6) est disponible à proximité immédiate du réseau (1), et lorsqu'une telle clé correspondante et/ou un tel code correspondant envoyés par un émetteur-récepteur (9) est disponible ou est détecté, à procurer un accès à des parties sécurisées du réseau (1) par le fait de basculer ou de maintenir un commutateur (6), et lorsqu'une telle clé et/ou un tel code envoyés par un émetteur-récepteur (9), correspondant à un commutateur n'est pas disponible ou n'est pas détecté, à empêcher l'accès aux parties sécurisées du réseau (1) par le fait de basculer de manière appropriée le commutateur (6) dans ce cas.

4. Procédé selon la revendication 3, **caractérisé en ce qu'**il fait usage d'un moyen de sécurité selon la revendication 1.

5. Procédé selon la revendication 3, **caractérisé en ce qu'**il fait usage d'un réseau sécurisé selon la revendication 2.
